# EUROPEAN PATENT SPECIFICATION

(11) **EP 0 910 731 B1**
(45) Date of publication and mention of the grant of the patent: **05.06.2002**
(21) Application number: 96925222.0
(22) Date of filing: 10.07.1996
(51) Int. Cl.: F02C 3/30, F01K 21/04

(54) **METHOD AND DEVICE FOR GENERATION OF MECHANICAL WORK AND, IF DESIRED, HEAT IN AN EVAPORATIVE GAS TURBINE PROCESS**
VERFAHREN UND VORRICHTUNG ZUM LIEFERN VON MECHANISCHER ARBEIT UND, WENN GEWÜNSCHT, WÄRME IN EINEM GASVERDAMPFUNGSTURBINENPROZESS
PROCEDE ET DISPOSITIF POUR PRODUIRE DU TRAVAIL MECANIQUE ET, SI DESIRE, DE LA CHALEUR, DANS UNE TURBINE A EVAPORATION DE GAZ

(43) Date of publication of application: 28.04.1999
(73) Proprietor: Vattenfall AB (publ), 162 87 Stockholm (SE)
(72) Inventor: WESTERMARK, Mats, S-183 65 Täby (SE)
(74) Representative: Delmar, John-Ake
(86) International application number: SE9600936
(87) International publication number: WO9801658

(56) References cited:
- EP-A- 0 619 417
- US-A- 3 353 360
- US-A- 4 537 023
- US-A- 4 653 268

## Description

The present invention refers to a method for generation of mechanical work and, if desired, heat in an evaporative gas turbine process, comprising compression of air in at least one stage without or with intercooling, transport of said air with water to a combustion chamber for combustion together with fuel and discharge of the combustion exhaust gases to a gas turbine following thereto for generation of mechanical work and heat, if desired, of the compressed air, only a partial flow being humidified by addition of water while the rest of the air flow being carried to the combustion chamber without passing the humidifier, said partial air flow to be humidfied constituting between 10 and 30% of the total flow of compressed air and being subjected to a high-rate counterflow humidification to a moisture content of above 0.3 kgms water per kgms dry air and, if desired, heating to an elevated temperature before entrance into the combustion chamber. The invention also refers to a device for carrying out said method.

A method of the type mentioned above is known from e.g. US-A 4 537 023 (EP 0 081 996). In said patent publication it is suggested, however, that that portion of the compressed air which is humidified amounts to between 60 and 100% of the total quantity of compressed air. In the practical application this implies that very great air flows are to be handled and therefore the equipment required for the carrying out of the method becomes very volume-consuming and expensive. Particularly the column-like humidifying apparatus will require a pressure vessel with great volume and hence the building costs become high. To this also heat exchangers for cooling and re-heating of the humidified flow contribute, which similar to humidifiers and channels must be made of corrosion-resistant material (acid-resistant stainless steel). Therefore, it would be desirable to be able to reduce the volume of air which is to be humidified, in some way or other.

From US-A-4 653 268 is known a similar gas turbine cycle in which the amount of compressed air for producing the multiphase mixture is "more than 20% and preferably more than 40%". The amount of injected water is stated to be between 0.1 - 0.4 kg-mol per 1 kg-mole of intaked air.

EP-A-0 619 417 discloses a cycle including no humidification but only a boiler injecting steam to part of the compressed air.

The most important conditions for the carrying out of an effective evaporative gas turbine cycle by a given gas turbine is the attainment of high electric efficiency, the minimizing of the required heat exchanger surface and the minimizing of the need of auxiliary effect to overcome the pressure loss of the humidifier and heat exchangers. It is also extremely important to minimize the emission of salts in the humidification and to reduce the need for modifications when available gas turbine apparatus are to be converted into evaporative gas turbines.

The object of the present invention now is to suggest a method and a device which eliminate previous draw-backs, particularly when it comes to costs for the humidification step (including water treatment) and which give a high electric efficiency rate and for the rest fill the aforementioned desiderata.

According to the invention, this is achieved substantially in that the partial flow of compressed air to be humidified is subjected to a cooling before the humidification, heat gained therefrom being utilized to said humidification.

A device according to the invention for the carrying out of the method comprises a single or multistage compressor for compressing and carrying air together with water to a combustion chamber for combustion together with supplied fuel and discharge to a gas turbine for generation of electric power and, if desired, heat, of the compressed air, only a partial flow being adapted to be humidified by addition of water, while the rest of the compressed air flow being carried to the combustion chamber without passing through the humidifying means, and with a branch circuit for branching-off from the pressure side of the compressor between 10 and 30% of the compressed air and carrying said portion to a device for high-rate counterflow humidification and, if desired, heating of the same before also said air portin is carried further to the combustion chamber. The features essentially distinguishing said device is that the branched-off circuit comprises a cooling device for the branched-off portion of compressed air to be humidified, the heat gained from the cooling device being adapted to be supplied to the humidifying device.

Owing to the invention it is provided that only a smaller portion, namely less than the half of and particularly between 10 and 30% of the air flow of the gas turbine compressor first is carried through heat exchangers, if any, for cooling and then through the humidifying device and finally through heat exchangers for heating. The rest of the compressed air is lead to the gas turbine without passing through the humidifier. The humidified air portion is controlled by e.g. an auxiliary compressor which makes it possible to control the rate of humidification to an optimal value. By such an auxiliary compressor it is also possible to avoid loading the gas turbine with increased pressure drop due to the humidification. An auxiliary compressor increases the rate of efficiency and reduces the risk for pumping in the gas turbine compressor.

The method according to the invention has several advantages. Thus a high rate of electric efficiency is obtained. The electric rate of efficiency which can be obtained depends both on the gas turbine performance and the detail design of the evaporative process. For certain gas turbine data the partial flow humidification implies greater advantages than for other. Calculations which have been carried out show however that partial humidification in combination with suitably designed humidifiers in most cases give a higher rate of electric efficiency than in corresponding cases with humidification of all or the main portion of the compressed air. A reason for the improved electric efficiency rate is that the need of auxiliary effect diminishes when only a partial volume of the compressed air is to be humidified. This will be further described below in the following.

In partial flow humidification the after-cooler can be made much smaller since only a partial volume, particularly between 10 and 30% of the compressed air need to be cooled. For the same reason the heat exchanger surface is reduced, which is required for re-heating of humidified compressed air, e.g. to initial temperature of the branched-off compressed air. The heat effect transferred to the humidifier is reduced in partial flow humidification in many of the studied cases while the driving temperature difference increases. Taken together it is hence required a smaller heat exchanger surface, seen relatively.

In full flow or almost full flow humidification such as according to the above-stated US Patent specification, this compressed air flow is effected as a whole by pressure drop in the humidifier and in associated heat exchangers such as after-coolers and recuperators. In its turn, the pressure drop leads to reduced efficiency rate due to the fact that the pressure in the compressor need to be increased in order to maintain the pressure in the turbine. Furthermore, the risk for pumping in the compressor increases. On the contrary, in partial flow humidification only a small partial volume, particularly 10-30%, of the compressed air will be subjected to the above-stated pressure drops. This can be compensated by means of an auxiliary compressor. The need of auxiliary effect to the auxiliary compressor is much less than the effect losses in full flow humidification.

The invention will be further described below with reference to the accompanying drawing, in which Fig. 1 diagrammatically illustrates an example of a partial flow humidified evaporative process cycle in a gas turbine without intercooling, Fig. 2 diagrammatically shows an example of a partial flow humidified evaporative process cycle in an intercooled gas turbine, Fig. 3 diagrammatically illustrates an example of a partial flow humidified evaporative cycle for co-generation of power and heat, Fig. 4 illustrates diagrammatically an example of a humidifier with evaporation from heat surfaces, while Fig. 5 illustrates an example of a humidifier with internal packing.

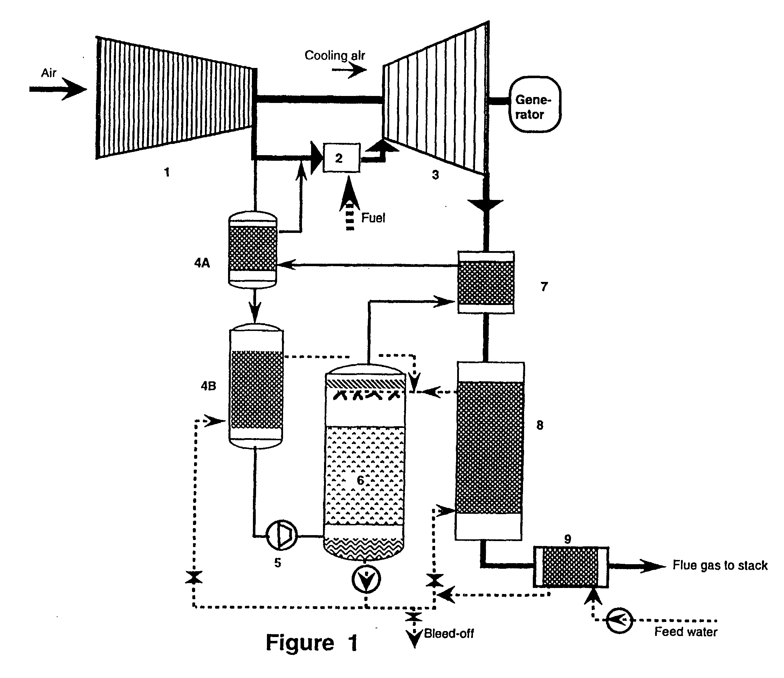

As can be seen in Fig. 1, the method according to the invention implies that ambient air is sucked into a compressor 1, in this case without intercooling, and the main portion of its discharged compressed air is carried without humidification directly to a combustion chamber 2. A smaller portion of said discharged air, less than the half thereof and particularly 10-30% of said air is carried to a heat exchanger 4A and an after-cooler 4B for being cooled. After that said air portion is carried through a humidifying device 6 for being heated and humidified, i.e. for increasing the water vapour content. The humidified compressed air then is heated by heat exchange with gas turbine exhaust gases in a heat exchanger 7. Certain gas turbines with high working pressure, mostly so-called aero derivatives, have higher temperatures in the compressor outlet than in the turbine outlet and therefore a further heating of humidified air can be made by exchange against compressed air in the first heat exchanger 4A as mentioned above.

The portion of the compressed air that is humidified is hurt as mentioned from an extra pressure drop during heat exchange and humidification. This pressure drop is compensated by a pressure increase by means of an auxiliary compressor 5. Owing thereto it is avoided that the gas turbine will suffer from increased pressure drop due to the humidification. A pressure drop reduces the efficiency rate and increases the risk of pumping in the gas turbine compressor. An auxiliary compressor also provides for a control of the portion of humidified air and hence a control of the humidification, such as by controlling the speed of the auxiliary compressor 5.

Because of the cost of equipment it can in certain cases be advantageous to omit one or more of the heat exchangers 4A, 4B or 7 even if the performance then will be slightly impaired. Furthermore, the heat exchanger 4A is to be omitted in cases where the temperature in the compressor outlet is too low to further increase the temperature of the humidified air. The heat required for the humidification is taken mainly from cooling of gas turbine exhaust gases in the heat exchanger 8 and to a smaller extent from cooling of compressed air in the heat exchanger 4B.

The humidified compressed air which has been heated in the heat exchanger 7 is carried through the heat exchanger 4A to the inlet of the combustion chamber 2. In a known way the combustion chamber is supplied with suitable fuel such as natural gas. The exhaust gases from the combustion of the fuel and the humidified compressed air are then discharged to the turbine 3 which in a known way at one hand drives the compressor 1 and on the other delivers mechanical work to a generator or the like. From the turbine the exhaust gases are carried through the last-mentioned heat exchanger 7 to an economizer 8 and finally through a feed water pre-heater 9 to leave through a flue. Feed water which has been pre-heated in the feed water pre-heater 9 is delivered to a conduit which firstly leads to the economizer 8 and then further to the upper portion of the humidifier 6 but also to the after-cooler 4B and from there similarly to the upper portion of the humidifier 6.

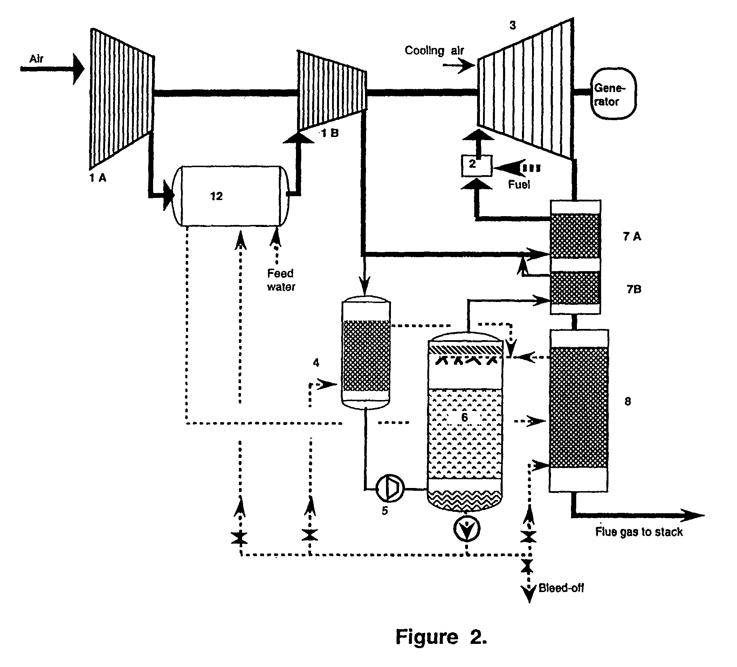

In Fig. 2 is illustrated a partly different example of a partial flow humidified evaporative cycle which primarily is adapted to be used in intercooled gas turbines. The combination of intercooling and evaporative cycle is advantageous and provides for an increase of the efficiency rate in comparison with corresponding gas turbines without intercooling. The reason for that is i.a. that heat from the intercooling maybe used for humidification and in that the intercooling reduces the compression work.

More closely, ambient air is compressed in the compressor 1A and is cooled in an intercooler 12 and further compressed in a compressor 1B. The main portion of the compressed air is heated by heat exchange with gas turbine exhaust gases in a heat exchanger 7A and is then carried without humidification to the combustion chamber 2. A portion less than the half of this compressed air and particularly about 10-30% thereof is carried to the heat exchanger 4 for being cooled. Furthermore, it is carried through the humidifying device 6 for being heated and humidified. The humidified compressed air then is heated by heat exchange with gas turbine exhaust gases in the heat exchangers 7B, 7A.

As in the embodiment illustrated in Fig. 1 the partial flow of the compressed air which is to be humidified is hit by an extra pressure drop but also in the present embodiment this can be compensated by means of an auxiliary compressor 5 with the same advantageous result as described above.

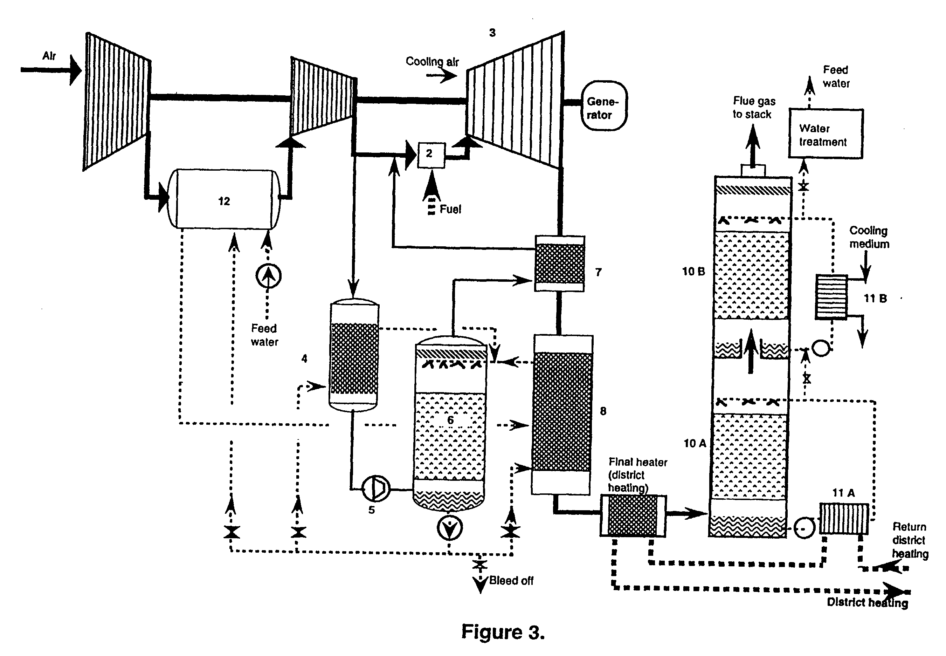

In Fig. 3 is shown an embodiment which to a great extent is similar to the one which is illustrated in Fig. 2 but which is particularly adapted for production of power and heat. It is to be added that the embodiment of the method and device according to the invention illustrated in Fig. 3 is self-supporting with water.

More closely, as is illustrated to the right in this Fig. 3, the exhaust gases leaving the economizer 8 are led through a final heater for heat exchange with a district heating system and then introduced into a condensation column 10A, 10B. In the portion 10A a partial condensation is carried out for production of district heating while in the portion 10B of said column, a further condensation is made to produce water for reuse in the humidifier. In this figure there is also illustrated further water treatment means such as an heat exchanger 11A for the return water from the district heating system, a cooling water supply 11B and feed water treatment means.

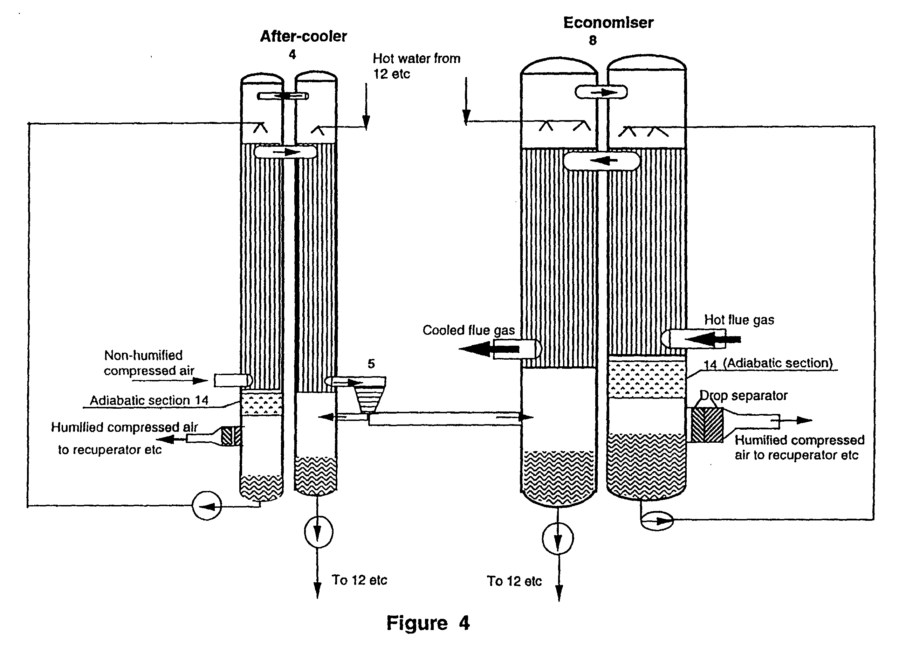

In Fig. 4 is shown a preferred embodiment of a humidifying device for use in connection with the invention. Said device comprises water-drizzled heat exchanger surfaces where heat for the humidification is supplied from the gas turbine exhaust gases and/or from compressed air while pressurized air required to the humidification is supplied. In certain cases there may also be used other heat sources such as hot flue gases from different fuels (such as solid fuels) or waste-heat from industrial processes.

As is evident from the Figure, the heat surface is divided into parts which are drizzled with different water flows. The advantage thereof is that the water flow from the cooler portion of the humidifier will have a low temperature suitable for e.g. intercooling of compressed air or final cooling of exhaust gases.

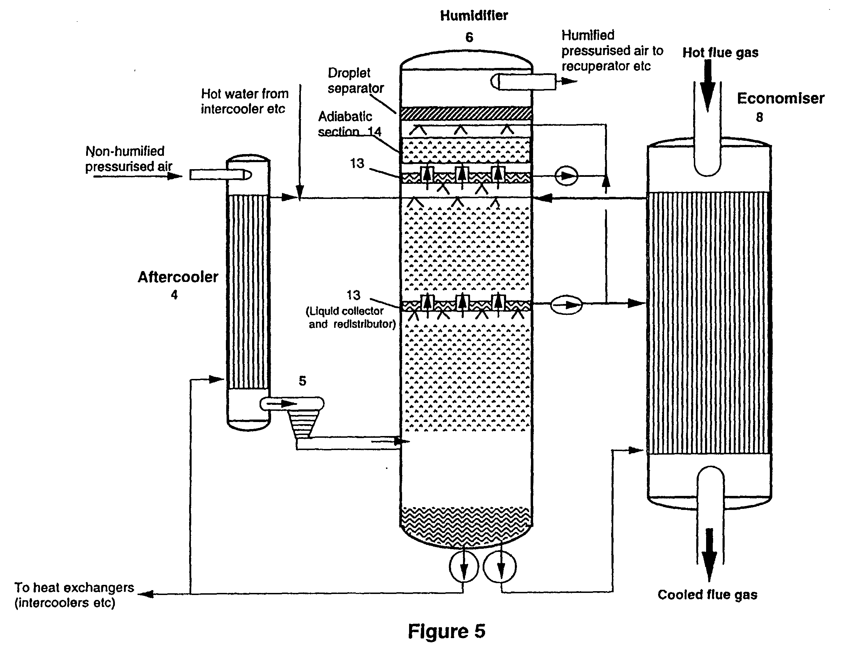

In Fig. 5 is illustrated another preferred embodiment of the humidifying device 6 which comprises a column with water-drizzled filling of lumped packing, continuous packing or other surface-increasing inserts or contact trays where heat for the humidification is supplied through a water circuit from the gas turbine exhaust gases and/or from compressed air necessary for the humidification is supplied. The water flow to the humidifying device is heated to a temperature not exceeding the boiling temperature of water at the pressure of said humidifying device and not less than 50°C over a temperature at the water outlet from the humidifying device. As is evident from the Figure, the column is equipped with a number of intermediary trays 13 which provide for the extraction of water at different temperature levels. The advantage thereof is that the water outlet in the lowermost extraction points will be lower than in a column with only one outlet. The intercooling of the compressed air or the final cooling of the exhaust gases then can be driven further with a column having a plurality of water extraction points. When humidifying a partial flow humidifying devices having a plurality of water outlets mostly are required in order to reach maximum performance. Intermediary trays 13 are filling the purpose of collecting water from above-lying sections of the column, provide for the extraction of partial flows to e.g. a pump and to distribute the remaining water flow to the section lying therebelow.

The transfer of salt from the water to the compressed air is an essential parameter in that the gas turbines will suffer from serious salt corrosion when a critical salt content is exceeded. The salt transfer is caused by the fact that the water in the humidifier contains salts (such as salts of sodium, potassium etc.) and in that a certain entrainment of water droplets to the gas phase is unavoidable in the humidifying device even if the same is provided with efficient drop separators. The water in said drops evaporates and leaves behind salt particles which pass through the gas turbine. In a given humidifying device a certain amount of water droplets are entrained per m³ compressed air. In a partial flow humidification according to the invention in which only a partial volume of less than the half and preferably between 10 and 30% of the compressed air need to be humidified the entrainment of water droplets and salts to the gas phase consequently will be only about 20% of the entrainment in full flow. In partial flow humidification it can thus be allowed a higher salt content in the water which has economical advantages.

In cases where the content of water droplets and salts in the humidified air need to be reduced further the humidifying device also may comprise adiabatic or cooled steps 14 with water-drizzled filling or contact bottoms localized in the direction of the gas flow from the steps with heat supply such as is evident from Figs. 4 and 5. The function of the adiabatic or cooled steps is to secure that the humidified air leaving the heat supply steps is brought close to its saturation condition which improves the function of drop separators which are localized at or in the direction of the gas flow from the adiabatic or cooled steps. When leaving the very humidifier the compressed air is not entirely saturated. Entrained water droplets then have a tendency to dry into still smaller droplets or to entirely dry salt particles with low degree of separation in the drop separators. By bringing the compressed air closer to a condition of saturation the load of salt on the gas turbine can thus be reduced. In Figs. 4 and 5 is shown a water-poured filling 14 which is located at the gas outlet from the humidifier, a still further saturation being obtained before the drop separator.

One problem in the realization of evaporative gas turbine cycles is that existing gas turbines need to be modified. A conventional gas turbine needs to be provided with outlets for compressed air for humidification and with inlets for humidified compressed air. In most cases this is much simpler to realise in the partial flow case such as according to the present invention.

Should the pressure drop of the partial flow be compensated by means of an auxiliary compressor the operating pressure of the gas turbine will be influenced only marginally. Since the humidified air is treated separately in partial humidification there are possibilities to choose how the feeding of humidified air to the turbine is to be made. A corresponding freedom does not exist in the full flow case. In certain cases there may be advantages in preferably carrying humidified air to the combustion chamber while in other cases it might be better to e.g. use humidified air for cooling of turbine blades or combustion chambers. Generally, partial flow humidification leads to smaller differences in the operative conditions of the gas turbine than full flow humidification which facilitates the remodelling of existing gas turbines.

## Claims

1. A method for generation of mechanical work and, if desired, heat in an evaporative gas turbine process, comprising compression of air in at least one stage (1) without or with intercooling, transport of said air with water to a combustion chamber (2) for combustion together with fuel and discharge of the combustion exhaust gases to a gas turbine following thereto for generation of mechanical work and heat, if desired, of the compressed air, only a partial flow being humdified (6) by addition of water while the rest of the air flow being carried to the combustion chamber without passing through the humidifying step, said partial air flow to be humidified constituting between 10 and 30% of the total flow of compressed air and being subjected to a high-rate counterflow humidification to a moisture content of above 0.3 kgms water per kgms dry air and, if desired, heating to an elevated temperature before entrance into the combustion chamber, **characterized in that** the partial flow of compressed air to be humidified is subjected to a cooling (4) before the humidification, heat gained therefrom being utilized to said humidification.

2. A device for carrying out of the method according to claim 1 and comprising a single or multistage compressor (1) for compressing and carrying air together with water to a combustion chamber (2) for combustion together with supplied fuel and discharge to a gas turbine (3) for generation of electric power and, if desired, heat, of the compressed air, only a partial flow being adapted to be humidified by addition of water, while the rest of the compressed air flow being carried to the combustion chamber (2) without passing through the humidifying means, and with a branch circuit for branching-off from the pressure side of the compressor (1) between 10 and 30% of the compressed air and carrying said portion to a device (6) for high-rate counterflow humidification and, if desired, heating of the same before also said air portion is carried further to the combustion chamber (2), **characterized in** that the branched-off circuit (A) comprises a cooling device (4) for the branched-off portion of compressed air to be humidified, the heat gained from the cooling device being adapted to be supplied to the humidfying device (6).

3. A device according to claim 2, and including an auxiliary compressor (5), **characterized in that** the auxiliary compressor (5) is mounted in the branched-off circuit (A) and adapted for control of the flow rate and the pressure drop of the branched-off portion of compressed air to be humidified in its passage through the humidifying and heat exchange devices (4, 6).

## Patentansprüche

1. Verfahren zum Liefern von mechanischer Arbeit und wenn gewünscht Wärme in einem Verdampfungsgasturbinenprozeß, wobei Luft in wenigstens einer Stufe (1) mit oder ohne Zwischenkühlung komprimiert, die Luft mit Wasser zu einer Verbrennungskammer (2) zum Verbrennen zusammen mit Brennstoff transportiert wird, und die Verbrennungsabgase an eine darauffolgende Gasturbine abgegeben werden zur Erzeugung von mechanischer Arbeit und falls gewünscht Wärme der Druckluft, wobei nur ein Teilstrom bei (6) durch Zugabe von Wasser befeuchtet wird, während der Rest des Luftstroms ohne Durchlaufen der Befeuchtungsstufe zur Verbrennungskammer geführt wird, wobei der zu befeuchtende Luftteilstrom zwischen 10 und 30 % des Gesamtdruckluftstroms bildet und einer Gegenstrombefeuchtung mit hohem Durchsatz bis zu einem Feuchtigkeitsgehalt von über 0,3 kg Wasser pro kg trockener Luft unterworfen und falls gewünscht vor Eintritt in die Verbrennungskammer auf eine erhöhte Temperatur erwärmt wird, **dadurch gekennzeichnet, daß** der zu befeuchtende Teilstrom der Druckluft vor der Befeuchtung einem Kühlen (4) unterworfen wird, wobei die dabei gewonnene Wärme für die Befeuchtung verwendet wird.

2. Vorrichtung zur Durchführung des Verfahrens nach Anspruch 1 mit einem Einstufenoder Mehrstufenkompressor (1) zum Komprimieren und Fördern von Luft zusammen mit Wasser zu einer Verbrennungskammer (2) zum Verbrennen zusammen mit zugeführtem Brennstoff und Abgabe an eine Gasturbine (3) zur Erzeugung von elektrischer Energie und falls gewünscht Wärme der Druckluft, wobei nur ein Teilstrom für die Befeuchtung durch Zugabe von Wasser vorgesehen ist, während der restliche Strom von Druckluft der Verbrennungskammer (2) ohne Durchlaufen der Befeuchtungsvorrichtung zugeführt wird, und mit einem Zweigkreislauf, der von der Druckseite des Kompressors (1) zwischen 10 und 30 % der Druckluft abzweigt und diesen Teil einer Vorrichtung (6) zur Gegenstrombefeuchtung mit hohem Durchsatz und, falls gewünscht Erwärmen derselben zuführt, bevor auch dieser Luftteil weiter zur Verbrennungskammer (2) geführt wird, **dadurch gekennzeichnet, daß** der Zweigkreis (A) eine Kühlvorrichtung (4) für den zu befeuchtenden abgezweigten Teil der Druckluft aufweist, wobei die von der Kühlvorrichtung gewonnene Wärme dafür vorgesehen ist, daß sie der Befeuchtungsvorrichtung (6) zugeführt wird.

3. Vorrichtung nach Anspruch 2 mit einem Hilfskompressor (5), **dadurch gekenn-zeichnet, daß** der Hilfskompressor (5) in den Zweigkreis (A) eingebaut und dafür eingerichtet ist, die Durchflußrate und den Druckabfall des zu befeuchtenden abgezweigten Teils der Druckluft bei seinem Durchlauf durch die Befeuchtungs- und Wärmeäustauschvorrichtungen (4, 6) zu steuern.

## Revendications

1. Procédé de production d'un travail mécanique et, si on le désire, de chaleur dans un procédé utilisant une turbine à gaz à évaporation, comprenant la compression de l'air en au moins une étape (1) sans ou avec refroidissement intermédiaire, le transport de cet air avec de l'eau dans une chambre à combustion (2) pour la combustion conjointement avec du carburant et l'envoi des gaz d'échappement dans une turbine à gaz qui lui fait suite pour la production de travail mécanique et de chaleur, si on le désire, de l'air comprimé, seul un courant partiel étant humidifié (6) par addition d'eau, le reste du courant d'air étant transporté dans la chambre de combustion sans traverser l'étape d'humidification, ce courant d'air partiel à humidifier constituant entre 10 et 30 % du courant total d'air comprimé et étant soumis à une humidification à contre-courant à grande vitesse jusqu'à une teneur en humidité supérieure à 0,3 kg d'eau par kg d'air sec et, si on le désire, un chauffage à température élevée avant l'entrée dans la chambre de combustion, **caractérisé en ce que** le courant partiel d'air comprimé à humidifier est soumis à un refroidissement (4) avant l'humidification, la chaleur fournie par celui-ci étant utilisée pour cette humidification.

2. Dispositif pour l'application du procédé selon la revendication 1 et comprenant un compresseur à un seul étage ou à plusieurs étages (1) pour comprimer et transporter l'air en même temps que de l'eau dans une chambre à combustion (2) pour la combustion en même temps que du carburant fourni et l'envoi dans une turbine à gaz (3) pour la production de courant électrique et, si on le désire, de chaleur, de l'air comprimé, seul un courant partiel étant adapté à être humidifié par addition d'eau, tandis que le reste du courant d'air comprimé est transporté dans la chambre de combustion (2) sans traverser le moyen d'humidification, et avec un branchement pour la dérivation du côté pression du compresseur (1) d'entre 10 et 30 % de l'air comprimé et l'envoi de cette portion dans un dispositif (6) pour l'humidification à contre-courant à grande vitesse et, si on le désire, son chauffage avant que cette portion de l'air soit aussi envoyée ultérieurement à la chambre de combustion (2), **caractérisé en ce que** le circuit dérivé (A) comprend un dispositif de refroidissement (4) pour la portion dérivée de l'air comprimé à humidifier, la chaleur fournie par le dispositif de refroidissement étant adaptée à être fournie au dispositif d'humidification (6).

3. Dispositif selon la revendication 2, et contenant un compresseur auxiliaire (5), **caractérisé en ce que** le compresseur auxiliaire (5) est monté dans le circuit dérivé (A) et adapté au réglage du débit et de la baisse de pression de la portion dérivée de l'air comprimé à humidifier lors de son passage à travers les dispositifs d'humidification et d'échange de chaleur (4, 6).
